(19) 

**Europäisches Patentamt**
**European Patent Office**
**Office européen des brevets**

(11) **EP 3 819 483 B1**

(12) **FASCICULE DE BREVET EUROPEEN**

(45) Date de publication et mention
de la délivrance du brevet:
**29.11.2023 Bulletin 2023/48**

(21) Numéro de dépôt: **20202987.2**

(22) Date de dépôt: **21.10.2020**

(51) Classification Internationale des Brevets (IPC):
*F01N 3/08* $^{(2006.01)}$    *F01N 3/20* $^{(2006.01)}$
*F01N 9/00* $^{(2006.01)}$    *F01N 11/00* $^{(2006.01)}$
*F02D 41/00* $^{(2006.01)}$    *F02D 41/02* $^{(2006.01)}$
*F02D 41/14* $^{(2006.01)}$

(52) Classification Coopérative des Brevets (CPC):
**F01N 3/0842; F01N 3/0871; F01N 3/208;**
**F01N 9/00; F02D 41/0275; F02D 41/1463;**
**F02D 41/1465;** F01N 11/00; F01N 13/009;
F01N 2250/12; F01N 2550/03; F01N 2560/021;
F01N 2560/026; F01N 2560/14; F01N 2570/14;

(Cont.)

(54) **PROCÉDÉ D'ESTIMATION DE LA QUANTITÉ D'OXYDES D'AZOTE (NOX) ET/OU DE LA QUANTITÉ D'AMMONIAC (NH3) EN AVAL D'UN PIÈGE À OXYDES D'AZOTE**

VERFAHREN ZUR BESTIMMUNG DER QUANTITÄT VON STICKOXIDEN (NOX) UND/ODER DER QUANTITÄT VON AMMONIAK (NH3) STROMAB EINER NOX-FALLE

METHOD OF ESTIMATION OF THE QUANTITY OF NITROGEN OXIDES (NOX) AND/OR THE QUANTITY OF AMMONIA (NH3) DOWNSTREAM OF A NOX TRAP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2019 FR 1912467**

(43) Date de publication de la demande:
**12.05.2021 Bulletin 2021/19**

(73) Titulaire: **Renault s.a.s**
**92100 Boulogne Billancourt (FR)**

(72) Inventeur: **TUNETIER, Christophe**
**91610 Balancourt sur Essonne (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 3 017 158**    **EP-A1- 3 502 430**
**EP-B1- 3 017 158**    **WO-A1-2015/122443**
**DE-A1- 10 249 610**    **DE-A1- 10 355 037**

(52) Classification Coopérative des Brevets (CPC):
(Cont.)
F01N 2610/02; F01N 2610/146; F01N 2900/1402;
F01N 2900/1616; F01N 2900/1812;
F02D 2200/0802; F02D 2200/0806; Y02A 50/20;
Y02T 10/12; Y02T 10/40

**Description**

La présente invention a trait à un procédé d'estimation de la quantité d'oxydes d'azote (NOx) et de la quantité d'ammoniac (NH3) à la sortie d'un piège à NOx équipant une ligne d'échappement d'un moteur à combustion interne. L'invention a également trait à un dispositif mettant en oeuvre le procédé d'estimation selon l'invention.

Les nouvelles normes de dépollution dans le domaine des véhicules automobiles sont devenues de plus en plus strictes, notamment, avec la baisse du seuil admis pour les émissions de gaz polluants.

Afin de satisfaire à ces nouvelles normes, des dispositifs de post-traitement des gaz d'échappement de plus en plus complexes sont disposés dans la ligne d'échappement.

Parmi ces dispositifs, il est connu d'utiliser des pièges à oxyde d'azote, appelé « NOx trap » en anglais, dans la ligne d'échappement, pour piéger les oxydes d'azote (NOx) et répondre ainsi aux normes de dépollution en vigueur. Dans le contexte de la présente invention, les oxydes d'azote (NOx) désignent un mélange de monoxyde d'azote (NO) et dioxyde d'azote ($NO_2$).

Lors d'un fonctionnement du moteur en mélange air-carburant pauvre, le piège à NOx stocke une partie de NOx émis par le moteur avec une certaine efficacité, c'est-à-dire selon une certaine proportion par rapport à la quantité totale d'oxydes d'azote (NOx) émise dans les gaz de combustion du moteur en amont du piège. L'efficacité de stockage du piège à NOx diminue au fur et à mesure qu'il se charge en oxydes d'azote (NOx).

Lorsque la masse des oxydes d'azote (NOx) atteint une limite de stockage, on réalise une purge du piège à NOx pour restaurer sa capacité de stockage. Concrètement, la purge du piège à NOx est réalisée par un passage à un mélange air-carburant riche. Le moteur fonctionne désormais selon un mode de fonctionnement de régénération en mélange air-carburant riche pendant lequel des réducteurs sont apportés sous la forme de carburant du moteur dans les gaz d'échappement pour transformer les oxydes d'azote (NOx) stockés dans le piège à NOx en molécules inoffensives, notamment en molécules de nitrogène ($N_2$) et en molécules d'eau ($H_2O$).

Un autre dispositif de post-traitement des gaz d'échappement est un catalyseur de réduction sélective des NOx, encore appelé catalyseurs SCR, pour Sélective Catalytic Réduction en anglais. Les catalyseurs SCR peuvent être utilisés seuls ou en combinaison avec un piège à NOx.

Les catalyseurs SCR réduisent les NOx de manière continue en injectant un composé à base d'urée qui est un précurseur de l'ammoniac (NH₃). Le composé le plus utilisé dans les catalyseurs SCR est connu sous le nom de la marque Adblue®.

Lorsqu'un catalyseur SCR est utilisé en combinaison avec un piège à NOx dans la ligne d'échappement, le piège à NOx est installé en amont du catalyseur SCR pour rester plus proche du moteur, afin qu'il chauffe rapidement dans des conditions de démarrage à froid. On cherche à ce qu'il atteigne le plus vite possible sa température d'amorçage, c'est-à-dire une température à laquelle il présente une efficacité de stockage minimale prédéterminée. Cette température d'amorçage est plus basse que la température d'amorçage d'un catalyseur SCR. Un piège à NOx est utilisé en association avec un catalyseur SCR essentiellement pour apporter une efficacité de traitement supplémentaire des NOx lorsque le catalyseur SCR est inactif.

Dans le cadre de l'utilisation d'un piège à NOx seul ou en combinaison avec le catalyseur SCR, un capteur NOx est placé en aval du piège à NOx pour mesurer la concentration en oxydes d'azote (NOx), souvent exprimée en partie par millions (ppm), à la sortie dudit piège. Ce capteur est ci-après appelé capteur de NOx aval.

Le capteur de NOx aval permet de connaître l'efficacité de traitement du piège à NOx, sa capacité de stockage et permet ainsi de savoir à quel moment il faut déclencher le passage en mélange riche pour restaurer l'efficacité dudit piège.

Toutefois, le capteur NOx ne peut pas détecter de l'ammoniac (NH₃) à la sortie du piège à NOx, car ledit capteur interprète l'ammoniac (NH₃) comme des oxydes d'azote (NOx). L'ammoniac (NH₃) peut être présent dans certaines conditions de fonctionnement du moteur. Par exemple, l'ammoniac (NH₃) peut être produit pendant le fonctionnement du moteur à mélange air-carburant riche, ledit fonctionnement ayant pour but d'éliminer des oxydes d'azote (NOx) stockés dans le piège à NOx ou encore des oxydes de soufre (SOx) stockés dans la ligne d'échappement.

La présence d'ammoniac (NH₃) en aval du piège à NOx peut causer des effets néfastes.

Dans un premier cas, l'ammoniac (NH₃) n'étant pas détecté par le capteur de NOx continue de traverser la ligne d'échappement jusqu'à ce qu'il soit évacué dans l'atmosphère extérieure, ce qui peut faire échouer l'homologation du véhicule. En effet, les normes de dépollution sont particulièrement sévères concernant le taux d'émission d'ammoniac (NH₃), car au-delà d'une certaine limite, l'ammoniac (NH₃) présente un risque de danger pour la santé. Il est donc nécessaire d'en limiter les rejets.

Dans un deuxième cas, lorsque le piège à NOx est utilisé en combinaison avec un catalyseur SCR, la quantité de NH₃ s'ajoute à la quantité réelle d'oxydes d'azote (NOx), ce qui augmente la quantité globale d'oxydes d'azote (NOx) remontée par le capteur de NOx. Ainsi, la quantité de NOx est surestimée à la sortie du piège à NOx. Cette information est ensuite transmise au catalyseur SCR qui injecte une quantité de l'Adblue® supérieure à la quantité nécessaire. Le surdosage de l'Adblue® produit un supplément d'ammoniac (NH₃) qui ne sert pas de réducteur pour transformer les oxydes d'azote (NOx) en molécules inoffensives. Ce supplément ammoniac (NH₃) a les mêmes conséquences que dans le premier cas, à savoir le dépassement de l'émission d'ammoniac par rapport à un seuil limite imposé par les normes.

Afin de remédier à ce problème de surplus ammoniac ($NH_3$), une solution proposée est d'implanter un capteur capable de détecter la présence du $NH_3$ et de déterminer sa quantité. Toutefois, ce capteur d'ammoniac ($NH_3$) complique le montage de la ligne d'échappement et augmente le coût de fabrication.

Un autre défaut du capteur de NOx aval est qu'il n'est pas capable de dissocier le monoxyde d'azote (NO) du dioxyde d'azote ($NO_2$). Le capteur de NOx aval indique simplement une mesure globale de concentration de NOx vue à son nez.

Afin d'obtenir la quantité de monoxyde d'azote (NO) et de dioxyde d'azote (NO2), la mesure globale du capteur de NOx doit être interprétée par l'application de modèles de calcul.

A titre d'exemple, on applique un ratio forfaitaire, notamment un ratio de 50%/50%, à la concentration de NOx mesurée par le capteur de NOx. En d'autres termes, on considère que parmi les NOx à la sortie du piège à NOx, 50% d'entre eux sont du monoxyde d'azote (NO) et 50% sont du dioxyde d'azote ($NO_2$). Toutefois, la valeur estimée obtenue par l'application du ratio forfaitaire présente parfois un grand écart par rapport à la valeur réelle de la concentration de monoxyde d'azote (NO) et de la concentration de dioxyde d'azote (NO2) à la sortie du piège à NOx.

Or, il est préférable de connaître le ratio du NO/NO2 pour estimer avec précision la mesure des NOx en concentration (i.e. exprimée par exemple en partie par million (ppm)). Cette précision de l'estimation est d'autant plus nécessaire qu'un catalyseur SCR est installé en aval du piège à NOx. Dans ce cas, il est souhaitable de connaître la proportion de monoxyde d'azote (NO) et de dioxyde d'azote (NO2) parmi les oxydes d'azote (NOx) sortant du piège pour obtenir un dosage précis de l'Adblue® afin d'obtenir un traitement efficace des oxydes d'azote (NOx), tout en ayant une utilisation économe de l'Adblue®. En effet le dosage diffère selon qu'on doit traiter des molécules de NO ou des molécules de $NO_2$, les rendements des réactions n'étant pas les mêmes. La publication EP 3 502 430 A1 montre un procédé d'estimation d'une quantité d'oxydes d'azote NOx, et d'une quantité d'ammoniac NH3 à la sortie d'un piège à NOx disposé dans une ligne d'échappement d'un moteur à combustion interne.

Compte tenu de ce qui précède, un objectif de l'invention est d'estimer de manière plus précise la quantité d'oxydes d'azote (NOx) en aval du piège à NOx en distinguant le monoxyde d'azote (NO) du dioxyde d'azote ($NO_2$), quel que soit le mode de fonctionnement du moteur. Un autre objectif de l'invention est d'indiquer la quantité de $NH_3$ présente en sortie dudit piège pendant la purge du piège à NOx.

Avec cet objectif en vue, un premier objet de l'invention concerne un procédé d'estimation d'une quantité d'oxydes d'azote (NOx) et/ou d'une quantité d'ammoniac ($NH_3$) à la sortie d'un piège à NOx disposé dans une ligne d'échappement d'un moteur à combustion interne, ledit moteur pouvant fonctionner selon

- soit un mode de fonctionnement en mélange air-carburant pauvre pendant lequel le piège à NOx stocke des oxydes d'azote (NOx), dit mode de fonctionnement pauvre ;
- soit un mode de fonctionnement de régénération en mélange air-carburant riche pendant lequel le piège à NOx est purgé, dit mode de fonctionnement riche.

Ledit procédé est exécuté par un calculateur avec des données acquises par un premier ensemble de capteurs et par un deuxième ensemble de capteurs.

Selon l'invention, le procédé comprend :

- une étape d'obtention d'une information de richesse du mélange air-carburant ;
- une étape d'identification du mode de fonctionnement du moteur ;
- une première étape de traitement des données acquises par le premier ensemble de capteurs , dite étape de traitement riche, si le mode de fonctionnement du moteur identifié est le mode de fonctionnement riche ;

ou

- une deuxième étape de traitement des données acquises par le deuxième ensemble de capteurs, dite étape de traitement pauvre , si le mode de fonctionnement du moteur identifié est le mode de fonctionnement pauvre;
- à l'issue de l'étape de traitement riche ou de l'étape de traitement pauvre, une étape d'ajustement de la quantité d'ammoniac ($NH_3$) de sorte que la quantité d'ammoniac ($NH_3$) reste en dessous d'un seuil limite prédéfini.

La solution proposée permet de résoudre les problèmes précités. En particulier, le procédé d'estimation proposé prend en compte le mode de fonctionnement du moteur et permet ainsi d'appliquer l'étape de traitement adaptée à la concentration en oxydes d'azote (NOx) mesurée en aval du piège à NOx.

En tenant compte du mode de fonctionnement du moteur, donc de la phase de travail du piège à NOx, la Demanderesse remarque un net gain en précision sur l'estimation des oxydes d'azote (NOx) ainsi que sur la prédiction de la proportion de monoxyde d'azote (NO) par rapport au dioxyde d'azote ($NO_2$).

De plus, le procédé proposé permet de donner une estimation importante de la production d'ammoniac ($NH_3$) en phase de purge du piège à NOx, ladite estimation étant prise en compte dans les données brutes acquises par le capteur de NOx aval. De cette manière, on obtient une prédiction fine des concentrations des composés de monoxyde d'azote (NO), de dioxyde d'azote ($NO_2$), et d'ammoniac ($NH_3$) à la sortie du piège à NOx.

Enfin, le procédé selon l'invention permet de maintenir la quantité d'ammoniac ($NH_3$) dans la ligne d'échappement en dessous d'un seuil limite prédéfini, par exemple un seuil imposé par les normes de dépollution. Ceci assure donc la conformité auxdites normes de dépollution d'un véhicule mettant en oeuvre le procédé selon l'invention.

Suivant des modes de réalisation préférés, l'invention comprend une ou plusieurs des caractéristiques suivantes qui peuvent être utilisées séparément ou en combinaison partielle ou totale entre elles.

Selon l'invention, le procédé d'estimation comprend aussi une étape de traitement riche, qui comprend:

- une étape d'initialisation du traitement riche ;
- une première étape d'acquisition de la concentration en oxydes d'azote (NOx) en aval du piège à NOx ;
- une première étape de surveillance de l'évolution temporelle de la concentration en oxydes d'azote (NOx) acquise en aval du piège à NOx ; et
- en fonction du résultat de ladite étape de surveillance, une première étape de sélection d'un taux de répartition des concentrations en monoxyde d'azote (NO), en dioxyde d'azote ($NO_2$) et en ammoniac ($NH_3$), en aval du piège à NOx, parmi un premier ensemble de taux de répartition prédéfinis.

Dans un exemple de réalisation de l'invention, l'étape d'initialisation du traitement riche comprend une sous-étape de récupération des valeurs de concentration d'oxydes d'azote acquises dès le début de la purge du piège à NOx, ou en d'autres termes, dès le début du mode de fonctionnement riche du moteur, jusqu'au déclenchement de l'étape de traitement riche. Ladite étape d'initialisation est utile lorsque l'étape de traitement riche est déclenchée quelque temps après le début de la purge du piège à NOx.

Dans un autre exemple, l'étape d'initialisation du traitement riche comprend une sous-étape de placement du curseur de l'observation de la concentration en oxydes d'azote (NOx) mesurée par le capteur de NOx aval à l'instant t initial où débute la purge du piège à NOx. En d'autres termes, l'étape d'initialisation assure que la mesure de la concentration en oxydes d'azote soit acquise dès le début de la purge du piège à NOx.

Selon au moins un des deux paragraphes précédents et dans un exemple de réalisation, la première étape de surveillance de l'évolution temporelle de la concentration en oxydes d'azote (NOx) acquise en aval du piège à NOx comprend au moins :

- une sous-étape de reconnaissance du profil d'une courbe illustrant la concentration en oxydes d'azote (NOx) acquise en fonction du temps ; et
- une sous-étape de comparaison du profil identifié avec plusieurs profils de référence préenregistrés.

A titre d'exemple, les profils de référence préenregistrés sont obtenus à partir des observations expérimentales du signal brut émis par le capteur de NOx aval lors de son fonctionnement.

Dans un exemple de réalisation de l'invention, ladite première étape de surveillance comprend :

- une première sous-étape de calcul numérique représentatif de la dérivée première de la concentration en oxydes d'azote (NOx) acquise en aval du piège à NOx en fonction du temps ;
- si, à l'issue de ladite première sous-étape de calcul numérique, ladite dérivée première est différente de 0, un premier taux de répartition prédéfini est sélectionné ;
- si, à l'issue de ladite première sous-étape de calcul numérique, ladite dérivée première est égale à 0, les sous-étapes suivantes sont réalisées :

  - une deuxième sous-étape de calcul numérique représentatif de la dérivée première et de la dérivée seconde de la concentration en oxydes d'azote (NOx) acquise en aval du piège à NOx en fonction du temps ;
  - si, à l'issue de ladite deuxième sous-étape de calcul numérique, ladite dérivée première et ladite dérivée seconde sont différentes de 0, un deuxième taux de répartition prédéfini est sélectionné;
  - si, à l'issue de ladite deuxième sous-étape de calcul numérique, une parmi ladite dérivée première et ladite dérivée seconde est égale à 0, un troisième taux de répartition prédéfini est sélectionné.

Ainsi, le calcul numérique représentatif de la dérivée première seule ou de la dérivée première avec de la dérivée seconde est un moyen permettant de reconnaître le profil du signal de concentration en oxydes d'azote (NOx) mesurée en fonction du temps. Puis, l'identification de la valeur nulle de la dérivée première seule ou de la dérivée seconde permet de comparer le profil reconnu avec les différents profils préenregistrés.

Si le profil reconnu correspond à un parmi des profils préenregistrés, un taux de répartition correspondant est appliqué à la concentration en oxydes d'azote (NOx) acquise par le capteur de NOx aval.

Ainsi, la répartition des concentrations de monoxyde d'azote (NO), de dioxyde d'azote ($NO_2$) et d'ammoniac ($NH_3$) à la sortie du piège à NOx est différente selon le profil temporel de concentration en oxydes d'azote (NOx).

Cette répartition apporte donc une amélioration en précision sur l'estimation des oxydes d'azote (NOx) en dissociant le dioxyde d'azote ($NO_2$) du monoxyde d'azote (NO). De plus, elle permet d'identifier la présence d'ammoniac ($NH_3$) pendant le mode de fonctionnement en mélange riche du moteur et de le quantifier avec moins d'erreurs. Ainsi, lorsqu'un catalyseur SCR est présent en aval du piège à NOx, la quantité d'Adblue® à injecter dans le catalyseur SCR est mieux dosée grâce à la précision apportée par le procédé tel que décrit.

A titre d'exemple, dans l'étape de traitement riche, le premier taux de répartition et le deuxième taux de répartition sont identiques, ledit premier taux de répartition ou ledit deuxième taux de répartition présentant 80% de monoxyde d'azote (NO), 20% de dioxyde d'azote ($NO_2$) et 0% d'ammoniac ($NH_3$). En outre, le troisième taux de répartition présente 0% de monoxyde d'azote (NO), 0% de dioxyde d'azote ($NO_2$), et 100% d'ammoniac ($NH_3$).

Dans un exemple de réalisation de l'invention, l'étape de traitement pauvre comprend :

- une étape de mesure de la température dans le piège à NOx;
- une étape d'analyse des données en fonction de la température mesurée ; et
- une deuxième étape de sélection d'un taux de répartition des concentrations en monoxyde d'azote (NO), en dioxyde d'azote (NO2), et en ammoniac (NH3), en aval du piège à NOx, parmi un deuxième ensemble de taux de répartition prédéfinis en fonction du résultat de ladite étape d'analyse des données.

Dans un exemple de réalisation, ladite étape d'analyse des données comprend :

- une première sous-étape de comparaison de la température mesurée avec une température de référence prédéfinie ;
- si, à l'issue de ladite première sous-étape de comparaison, la température mesurée est supérieure ou égale à la température de référence prédéfinie, un quatrième taux de répartition prédéfini est sélectionné;
- si ce n'est pas le cas, les sous-étapes suivantes sont réalisées :

  - une sous-étape de détermination du niveau de stockage du piège à NOx ;
  - une deuxième sous-étape de comparaison du niveau de stockage déterminé avec un niveau de stockage seuil prédéfini.
    - si, à l'issue de ladite deuxième sous-étape de comparaison, le niveau de stockage déterminé est supérieur ou égal au niveau de stockage seuil, un cinquième taux de répartition prédéfini est sélectionné;
    - si ce n'est pas le cas, un sixième taux de répartition prédéfini est sélectionné.

Ainsi, en plus de la phase de travail du piège à NOx, l'étape de traitement pauvre prend en compte d'autres paramètres, notamment de la température dans le piège à NOx et de la masse d'oxydes d'azote (NOx) stockée. Ainsi, l'estimation de monoxyde d'azote (NO) et de dioxyde d'azote ($NO_2$) s'appuie sur les conditions de fonctionnement proches de celles de la réalité, ce qui permet d'affiner le résultat de l'estimation.

Dans un exemple de réalisation de l'invention, ladite sous-étape de détermination du niveau de stockage du piège à NOx comprend une troisième sous-étape de calcul numérique d'une intégrale temporelle représentative de la masse de NOx stockée selon la formule suivante :

$$M = \int Qech \times ([NOx]in - [NOx]out)\ dt;$$

dans lequel Qech est le débit des gaz d'échappement, [NOx]in est la concentration en oxydes d'azote (NOx) à l'entrée du piège à NOx, et [NOx]out est la concentration en oxydes d'azote (NOx) à la sortie du piège à NOx.

Dans un exemple de réalisation :

- le quatrième taux de répartition présente 60% de monoxyde d'azote (NO), 40% de dioxyde d'azote ($NO_2$), et 0% d'ammoniac ($NH_3$) ;
- le cinquième taux de répartition présente 80% de monoxyde d'azote (NO), 20% de dioxyde d'azote ($NO_2$), et 0% d'ammoniac ($NH_3$); et
- le sixième taux de répartition présente 100% de monoxyde d'azote, NO, 0% de dioxyde d'azote ($NO_2$), et 0% d'ammoniac ($NH_3$).

Dans un autre exemple de réalisation de l'invention, l'étape de traitement pauvre peut être réalisée en appliquant un taux forfaitaire de répartition de dioxyde d'azote ($NO_2$) et de monoxyde d'azote (NO). Une telle étape de traitement est connue dans l'état de l'art.

Dans un exemple de réalisation de l'invention, l'étape d'ajustement de la quantité d'ammoniac ($NH_3$) est suivie par une étape d'estimation d'une valeur de l'efficacité du piège à NOx. Ensuite, si le piège à NOx est estimé inefficace, une étape de déclenchement de la purge du piège à NOx est réalisée et suivie par l'étape de traitement riche. Dans le cas contraire, si le piège à NOx est estimé efficace, l'étape de traitement pauvre est réalisée.

Ainsi, le procédé permet de connaître l'efficacité de traitement du piège à NOx et le cas échéant de le diagnostiquer. En connaissant cette efficacité, on peut déclencher la purge sur une valeur assez fiable qui est ici la valeur de la masse des oxydes d'azote (NOx) stockée dans le piège.

Un autre objet de l'invention concerne un dispositif d'estimation d'une quantité d'oxydes d'azote (NOx) et/ou d'une quantité d'ammoniac ($NH_3$) à la sortie d'un piège à NOx disposé dans une ligne d'échappement d'un moteur à combustion interne, ledit moteur pouvant fonctionner selon

- soit un mode de fonctionnement en mélange air-carburant pauvre pendant lequel le piège à NOx stocke des oxydes d'azote (NOx), dit mode de fonctionnement pauvre ;

- soit un mode de fonctionnement de régénération en mélange air-carburant riche pendant lequel le piège à NOx est purgé, dit mode de fonctionnement riche.

Selon l'invention, le dispositif comprend :

- un calculateur ;
- des moyens d'obtention d'une information de richesse du mélange air-carburant ;
- des moyens de détermination du mode de fonctionnement du moteur ;
- des premiers moyens de traitement destinés à traiter des données acquises par un premier ensemble de capteurs ;
- des deuxièmes moyens de traitement destinés à traiter des données acquises par un deuxième ensemble de capteurs;
- des moyens d'ajustement de la quantité d'ammoniac (NH$_3$).

Un tel dispositif peut donc récupérer les données venant des premier et deuxième ensembles de capteurs et exécuter le procédé d'estimation permettant d'obtenir une prédiction fine et précise de la concentration en monoxyde d'azote (NO), en dioxyde d'azote (NO$_2$), et en ammoniac (NH$_3$), à la sortie du piège à NOx.

A titre d'exemple, les premier et deuxième ensembles de capteurs peuvent comprendre des capteurs existants de la ligne d'échappement. Notamment, le premier ensemble de capteurs peut comprendre un capteur de concentration en oxydes d'azote (NOx) placé en aval du piège à NOx. D'un autre côté, le deuxième ensemble de capteurs peut comprendre un capteur de débit des gaz de combustion sortant du moteur, un capteur de concentration en oxydes d'azote (NOx) placé en amont du piège à NOx, un capteur de température du piège à NOx, et un capteur de concentration en oxydes d'azote (NOx) placé en aval du piège à NOx.

Dans un exemple de réalisation, le premier ensemble de capteurs et le deuxième ensemble de capteurs peuvent partager ensemble un ou plusieurs capteurs.

Dans un exemple, les moyens d'ajustement de la quantité d'ammoniac (NH3) sont conçus de manière que la ligne d'échappement produise une quantité d'ammoniac (NH$_3$) inférieure à une valeur limite prédéfinie. Cette valeur peut être imposée par les normes dépollution.

Dans un autre exemple de réalisation, les premiers moyens de traitement comprennent en outre le premier ensemble de capteurs et les deuxièmes moyens de traitement comprennent en outre le deuxième ensemble de capteurs. En d'autres termes, les premier et deuxième ensembles de capteurs appartiennent au dispositif d'estimation de sorte à former un kit de dispositif qui peut être installé sur n'importe quelle ligne d'échappement équipée d'un piège à NOx.

Un autre objet de l'invention concerne une ligne d'échappement d'un moteur à combustion interne.

Selon l'invention, la ligne d'échappement comprend :

- un piège à NOx;
- un dispositif d'estimation selon l'invention.

Dans un exemple de réalisation, la ligne d'échappement comprend un modèle d'estimation de la quantité de NOx en aval du piège à NOx à basse température. Le modèle d'estimation est nécessaire notamment pour donner une estimation à froid quand l'information du capteur à NOx aval n'est pas disponible, par exemple, peu après le démarrage du moteur.

Dans un exemple de réalisation, la ligne d'échappement comprend en outre un catalyseur de réduction sélective des oxydes d'azote disposé en aval du piège à NOx.

Enfin, l'invention a également pour objet un véhicule automobile comprenant une ligne d'échappement selon l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

[Fig. 1] la figure 1 représente de manière schématique un moteur à combustion interne suivie d'une ligne d'échappement selon un mode de réalisation de l'invention, équipée d'un piège à NOx ; la figure 1 représente également un dispositif d'estimation mettant en oeuvre un procédé d'estimation d'une quantité d'oxydes d'azote (NOx) et/ou d'une quantité d'ammoniac (NH$_3$) à la sortie du piège à NOx selon un mode de réalisation de l'invention ;

[Fig. 2] la figure 2 représente de manière schématique un exemple de réalisation de l'architecture du dispositif d'estimation de la figure 1 ; ledit dispositif interagit avec des ensembles de capteurs et d'autres éléments de la ligne d'échappement et du moteur ;

[Fig.3] la figure 3 représente de manière schématique les étapes du procédé d'estimation, selon un mode de réalisation de l'invention ;

[Fig. 4] la figure 4 représente de manière schématique les étapes réalisées pendant une étape de traitement riche appartenant au procédé d'estimation de la figure 3, selon un mode de réalisation de l'invention ;

[Fig.5] la figure 5 représente de manière plus détaillée les étapes réalisées pendant l'étape de traitement riche illustrée à la figure 4 ;

[Fig.6] la figure 6 est un premier graphique illustrant la concentration en oxydes d'azote (NOx) en aval du piège à NOx en fonction du temps, ladite concentration étant mesurée par un capteur de NOx aval et parallèlement par un premier moyen d'acquisition indépendant du capteur de NOx aval lors d'une première condition de fonctionnement du piège à NOx en phase de purge; le premier graphique illustre également la concentration en ammoniac (NH3) mesurée par un deuxième moyen d'acquisition indépendant du capteur de NOx aval lors de la même condition de fonctionnement du piège à NOx ;

[Fig.7] la figure 7 est un deuxième graphique illustrant la concentration en oxydes d'azote (NOx) en aval du piège à NOx en fonction du temps, ladite concentration étant mesurée par un capteur de NOx aval et parallèlement par un premier moyen d'acquisition indépendant du capteur NOx aval lors d'une deuxième condition de fonctionnement du piège à NOx en phase de purge; le deuxième graphique illustre également la concentration en ammoniac (NH$_3$) mesurée par un deuxième moyen d'acquisition indépendant du capteur de NOx aval lors de la même condition de fonctionnement du piège à NOx;

[Fig.8] la figure 8 est un troisième graphique illustrant la concentration en oxydes d'azote (NOx) en aval du piège à NOx en fonction du temps, ladite concentration étant mesurée par un capteur de NOx aval et parallèlement par un premier moyen d'acquisition indépendant du capteur de NOx aval lors d'une troisième condition de fonctionnement du piège à NOx en phase de purge; le deuxième graphique illustre également la concentration en ammoniac (NH$_3$) mesurée par un deuxième moyen d'acquisition indépendant du capteur de NOx aval lors de la même condition de fonctionnement du piège à NOx;

[Fig. 9] la figure 9 représente de manière schématique les étapes réalisées pendant une étape de traitement pauvre faisant partie du procédé d'estimation, selon un mode de réalisation de l'invention ;

[Fig.10] la figure 10 représente de manière plus détaillée les étapes réalisées pendant l'étape de traitement pauvre illustrée à la figure 9.

Les éléments structurellement et fonctionnellement identiques, présents dans plusieurs figures distinctes, sont affectés d'une seule et même référence numérique ou alphanumérique.

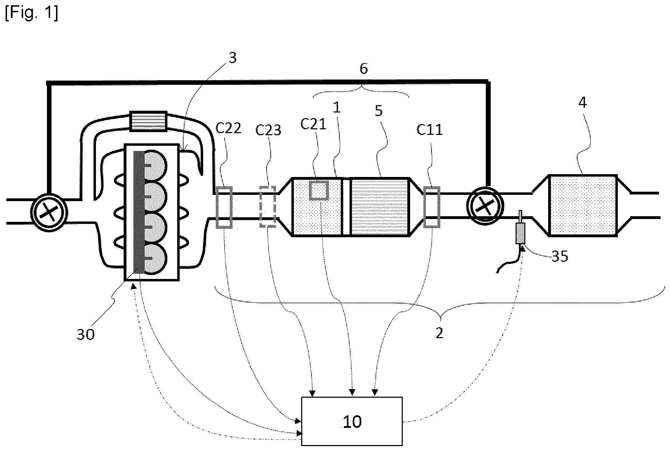

La figure 1 représente un moteur à combustion interne 3 qui est illustré ici de manière non limitative sous la forme d'un moteur à quatre cylindres en ligne. Il peut être du type à allumage par compression (diesel) ou du type à allumage commandé (essence). Dans l'exemple illustré, le moteur 3 est un moteur diesel. Le moteur 3 comprend une rampe d'injection 30 d'air et de carburant.

Le moteur 3 fonctionne soit selon un mode de fonctionnement en mélange air-carburant pauvre, dit mode de fonctionnement pauvre, soit selon un mode de fonctionnement en mélange air-carburant riche, dit mode de fonctionnement riche.

Le moteur 3 est associé à une ligne d'échappement 2 des gaz de combustion du moteur, encore appelé gaz d'échappement du moteur.

Dans l'exemple illustré, la ligne d'échappement 2 comprend trois dispositifs de dépollution 1, 5 et 4.

Le premier dispositif de dépollution 1 est un piège à NOx 1. Le deuxième dispositif de dépollution 5 est un filtre à particules 5. Ici, le filtre à particules 5 est disposé immédiatement derrière le piège à NOx 1 de manière à former un bloc 6. Ainsi, le bloc 6 regroupant le filtre à particules 5 et le piège à NOx 1 a pour double fonction de traiter les particules de suies présentes dans les gaz de combustion du moteur, et de réduire la quantité des oxydes d'azote (NOx) également présents dans les gaz de combustion.

Pendant le mode de fonctionnement pauvre du moteur 3, le piège à NOx 1 stocke d'oxydes d'azote (NOx). Pendant le mode de fonctionnement riche du moteur 3, le piège à NOx 1 est purgé, de sorte que les oxydes d'azote (NOx) stockés sont réduits en nitrogène (N2) et en eau (H20). La capacité de stockage du piège à NOx 1 est restaurée.

Le troisième dispositif de dépollution 4 est un catalyseur de réduction sélective des oxydes azotes, encore appelé catalyseur SCR. Dans cet exemple, le catalyseur SCR 4 est placé en aval du piège à NOx 1 et du filtre à particules 5, et à distance de ceux-ci.

Dans le présent document, les termes « amont » et « aval » sont définis par rapport au sens d'écoulement des gaz d'échappement dans la ligne d'échappement.

Le catalyseur SCR 4 réduit de manière continue les molécules d'oxydes d'azote (NOx) qui n'ont pas été traitées par le piège à NOx 1 en molécules inoffensives, telles que du diazote (N$_2$) et de l'eau (H$_2$0). Un injecteur 35 est implanté à l'entrée du catalyseur SCR 4 afin de lui apporter de l'urée liquide (Adblue®) qui est un réducteur des oxydes d'azote (NOx), et afin de mélanger l'urée liquide ((Adblue®) aux gaz avant leur introduction dans le catalyseur SCR.

En outre, la ligne d'échappement 2 est équipée de plusieurs capteurs placés à différents endroits.

Dans l'exemple illustré, ces capteurs, cités dans l'ordre de l'amont vers l'aval de la ligne d'échappement, sont :

-   un capteur de débit des gaz de combustion C22, encore appelé débitmètre C22, placé à une sortie d'échappement du moteur 3 ;

- un capteur de concentration en oxydes d'azote (NOx) C23 placé devant l'entrée du piège à NOx 1, ledit capteur étant ci-après appelé capteur de NOx amont C23 ;
- un capteur de température C21 placé à l'intérieur du piège à NOx 1 ; et
- un capteur de concentration en oxydes d'azote (NOx) C11 placé après la sortie du bloc 6, ledit capteur étant ci-après appelé capteur de NOx aval C11.

La fonction du capteur de NOx amont C23 est de mesurer la concentration en oxydes d'azotes (NOx) dans les gaz de combustion sortant du moteur. Dans un autre exemple de réalisation, cette concentration en oxydes d'azotes (NOx) en amont du piège à NOx 1 peut être estimée par un modèle de calcul en fonction d'un ensemble de paramètres représentatifs du fonctionnement du moteur, notamment de son régime, de la charge et de la température de liquide de refroidissement.

La fonction du capteur de NOx aval C11 est de mesurer la concentration en oxydes d'azotes (NOx) sortant du piège à NOx. En conséquence, dans un autre exemple de réalisation, le capteur NOx aval C11 peut être implanté juste après la sortie du piège à NOx 1, c'est-à-dire entre le piège à NOx 1 et le filtre à particules 5.

Les données acquises par les capteurs cités précédemment sont envoyées à un dispositif 10 d'estimation de la quantité d'oxydes d'azote (NOx) et/ou de la quantité d'ammoniac (NH₃) à la sortie d'un piège à NOx 1, ci-après le dispositif d'estimation 10.

En fonction des données remontées par les capteurs, le dispositif d'estimation 10 envoie des commandes, ici, à la rampe d'injection 30 et à l'injecteur 35.

Le dispositif d'estimation 10 est conçu pour mettre en oeuvre un procédé d'estimation de la quantité d'oxydes d'azote (NOx) et/ou de la quantité d'ammoniac (NH₃) à la sortie d'un piège à NOx 1. Ce procédé d'estimation et le rôle de chaque élément physique dans l'exécution du procédé seront détaillés plus tard dans la description.

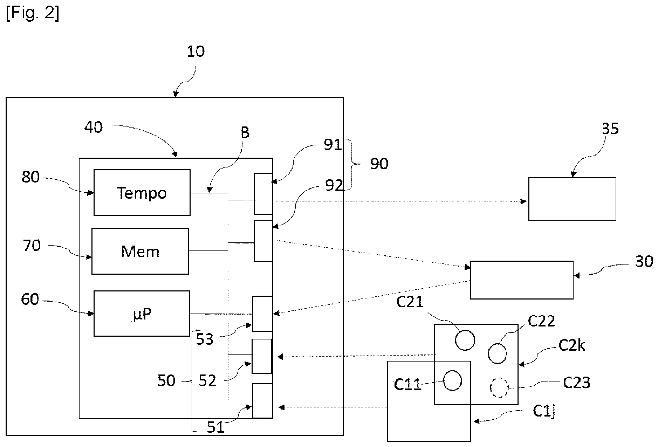

La figure 2 représente un exemple de réalisation de l'architecture du dispositif d'estimation 10.

Dans cet exemple, le dispositif d'estimation 10 comprend une unité de contrôle 40, encore appelée calculateur 40 qui communique avec les capteurs précités précédemment.

Dans l'exemple illustré, les capteurs sont organisés en deux ensembles de capteurs C1j et C2k. Chaque ensemble de capteurs C1j ou C2k communique avec le calculateur 40 dans une condition particulière. Ici, le premier ensemble de capteurs C1j et le deuxième ensemble de capteurs C2k partagent ensemble le capteur NOx aval C11.

Le calculateur 40 reçoit également les informations de la rampe d'injection 30.

Le calculateur 40 comprend en outre des portes d'entrée 50, 51, 52 et 53 pour l'acquisition des données des ensembles de capteurs C1j, C2k et de la rampe d'injection 30. Plus précisément, la première porte d'entrée 51 est destinée à recevoir les données du premier ensemble de capteurs C1j. La deuxième porte d'entrée 52 est destinée à recevoir les données du deuxième ensemble de capteurs C2k. Enfin, la troisième porte d'entrée 53 est destinée à recevoir les données de la rampe d'injection 30.

Le calculateur 40 comprend également des portes de sortie 90, 91 et 92 pour la transmission des commandes du calculateur 40 vers la rampe d'injection 30 et l'injecteur 35. Plus précisément, la première porte de sortie 91 transmet les commandes à l'injecteur 35 tandis que la deuxième porte de sortie 92 transmet les commandes à la rampe d'injection 30.

Le calculateur 40 comprend un processeur 60, des mémoires 70 et des moyens de gestion de temporisation 80. Le processeur 60 traite des informations stockées dans les mémoires 70 et faire exécuter des instructions stockées également dans les mémoires 70.

Les mémoires 70 peuvent stocker les informations telles que :

- une température de référence Tref,
- la température mesurée T par le capteur de température C21,
- un niveau de seuil de stockage S,
- la mesure du niveau de stockage M des oxydes d'azote stockés dans le piège à NOx ;
- des taux de répartition [α1,..., α6] de concentration en monoxyde d'azote (NO), en dioxyde d'azote (NO2) et en ammoniac (NH3),
- les mesures de concentration en oxydes d'azote (NOx) en amont et en aval du piège à NOx fournies respectivement ici par le capteur de NOx amont C23 et le capteur de NOx aval C11 ; ainsi que ;
- des instructions exécutables par le processeur 60 et correspondant aux étapes du procédé d'estimation.

Les moyens de gestion de temporisation 80 peuvent ici coopérer avec les portes d'entrée 50, 51, 52, 53 de manière à permettre l'acquisition des données à des instants différents, lesdits instants étant espacés d'un pas de temps régulier. Par exemple, ce pas de temps peut être compris entre 5 millisecondes et 500 millisecondes. Les moyens de gestion de temporisation 80 peuvent aussi coopérer avec le processeur 60 et les mémoires 70 pour effectuer des calculs périodiquement, par exemple à chaque pas de temps écoulé.

Le calculateur 40 comprend enfin les moyens de circulation d'informations B, encore appelés « bus » en anglais, permettant la communication entre les éléments du calculateur 40 entre eux.

Un mode de réalisation d'un procédé d'estimation de la quantité d'oxydes d'azote (NOx) et/ou de la quantité d'ammoniac (NH₃) à la sortie d'un piège à NOx 1, et mis en oeuvre par le dispositif d'estimation 10 détaillé précédemment sera maintenant décrit.

Le procédé comprend de manière optionnelle une étape de démarrage E000. Cette étape de démarrage E000 permet notamment de fournir une première estimation de concentrations en oxydes d'azote (NOx) en appliquant des paramètres par défaut prédéfinis. L'étape de démarrage E000 peut être exécutée peu de temps après le démarrage du moteur, la période pendant laquelle le piège à NOx 1 n'est pas encore actif.

Ensuite, le procédé comprend une étape d'obtention E100 d'une information de richesse du mélange air-carburant. Selon un mode de réalisation, pendant l'étape d'obtention E100, le calculateur 40 reçoit, via la troisième porte d'entrée 53, le ratio entre l'air et le carburant injectés dans les cylindres de combustion, venant de la rampe d'injection 30. Le ratio entre l'air et le carburant est ensuite stocké dans les mémoires 70.

Ici, la troisième porte d'entrée 53 et les mémoires 70 font partie donc des moyens d'obtention d'une information de richesse du mélange air-carburant.

Lors d'une étape d'identification E200 du mode de fonctionnement du moteur, le processeur 60 déduit la caractéristique du mélange air-carburant à partir de l'information sur le ratio entre l'air et le carburant injecté stockée dans les mémoires 70, ce qui permet donc d'identifier le mode de fonctionnement du moteur 3.

Ici, le processeur 60 et les mémoires peuvent être considérés comme des moyens de détermination du mode de fonctionnement du moteur.

Si le mode de fonctionnement identifié est le mode de fonctionnement riche, le dispositif d'estimation 10 exécute par la suite une première étape de traitement E300 des données acquises par le premier ensemble de capteurs C1j, dite étape de traitement riche E300.

Dans cet exemple, l'étape de traitement riche E300 est réalisée par des premiers moyens de traitement comprenant la première porte d'entrée 51, le processeur 60, les mémoires 70 et les moyens de temporisation 80. Les premiers moyens de traitement se basent sur les données acquises du premier ensemble de capteurs C1k comprenant, ici, le capteur de NOx aval C11.

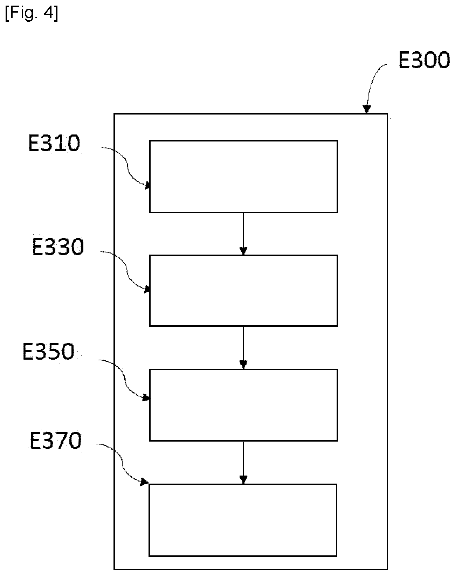

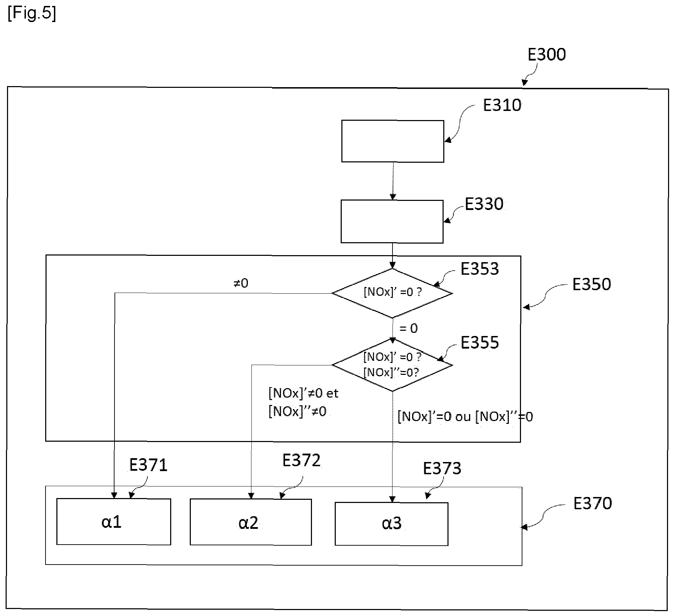

Un exemple de réalisation de l'étape de traitement riche E300 est illustré sur la figure 4 et sur la figure 5.

En référence à la figure 4, l'étape de traitement riche E300 comprend une étape d'initialisation E310 du traitement riche. Dans un exemple, l'étape d'initialisation consiste à repérer le passage du mode de fonctionnement pauvre au mode de fonctionnement riche, c'est-à-dire le début de la purge du piège à NOx 1, et à collecter les données nécessaires à partir du début de la purge jusqu'au moment où le dispositif d'estimation 10 déclenche l'étape de traitement riche E300. Ici, les données collectées peuvent être la concentration en oxydes d'azote (NOx) acquise par le capteur de NOx aval C11 à chaque instant depuis le démarrage de la purge du piège à NOx 1.

Vient ensuite une première étape d'acquisition E330 de la concentration en oxydes d'azote (NOx) en aval du piège à NOx 1. L'acquisition est réalisée par le capteur de NOx aval C11 jusqu'à la fin de la purge du piège à NOx 1. Les mesures du capteur de NOx aval C11 sont envoyées au calculateur 40, stockées dans les mémoires 70, et traitées par le processeur 60.

Dans un mode de réalisation, les moyens de gestion de temporisation 80 définissent à la fréquence d'envoi des mesures du capteur de NOx aval C11 au calculateur 40. Par exemple, une mesure de concentration en oxydes d'azote (NOx) peut être envoyée au calculateur toutes les 5 millisecondes. Cette durée est encore appelée un pas de temps fixé par le programmeur en fonction des paramètres du système.

Avec les données de concentration en oxydes d'azote (NOx) acquise en aval du piège à NOx 1, on réalise ensuite une première étape de surveillance E350 de l'évolution temporelle de ladite concentration.

Dans un mode de réalisation, la première étape de surveillance E350 comprend une étape d'observation de manière itérative la dérivée première de la concentration en oxydes d'azote (NOx) acquise en aval du piège à NOx 1 et la dérivée seconde de ladite même concentration.

Ladite dérivée première, représentée par le symbole [NOx]', peut être calculée comme suit :

[Math 1]

$$[NOx]' = \frac{[NOx]_{t(n)} - [NOx]_{t(n-1)}}{t(n) - t(n-1)}$$

Avec:

- $[NOx]_{t(n)}$ est la concentration en oxydes d'azote (NOx) acquise par le capteur de NOx aval C11 à un instant $t_{(n)}$ ;
- $[NOx]_{t(n-1)}$ est la concentration en oxydes d'azote (NOx) acquise par le capteur de NOx aval C11 à un instant $t_{(n-1)}$ précédant l'instant $t_{(n)}$.

La durée entre l'instant $t_{(n)}$ et l'instant $t_{(n-1)}$ est un pas de temps.

Ladite dérivée seconde, représentée par le symbole [NOx]", peut être calculée comme suit :

[Math 2]

$$[NOx]'' = \frac{[NOx]'_{t(k)} - [NOx]'_{t(k-1)}}{t(k) - t(k-1)}$$

Avec :

- $[NOx]'_{t(k)}$ est la dérivée première de la concentration en oxydes d'azote (NOx) calculée à un instant $t_{(k)}$ ;
- $[NOx]_{t(k-1)}$ est la dérivée première de la concentration en oxydes d'azote (NOx) calculée un instant $t_{(k-1)}$ précédant l'instant $t_{(k)}$.

Le calcul de la dérivée première et le calcul de la dérivée seconde peuvent être simultanés ou décalés.

Pour une raison de clarté, les dérivées précitées seront appelées tout simplement la dérivée première et la dérivée seconde.

L'observation de la dérivée première et de la dérivée seconde a pour but de reconnaître le profil de la courbe représentant la concentration en oxydes d'azote (NOx) acquise en aval du piège à NOx 1 en fonction du temps. Le profil observé sera ensuite comparé avec des profils préenregistrés de la courbe représentant les mêmes paramètres.

Les profils préenregistrés sont obtenus à partir des expériences conduites par la Demanderesse pour observer le comportement du capteur NOx aval 1.

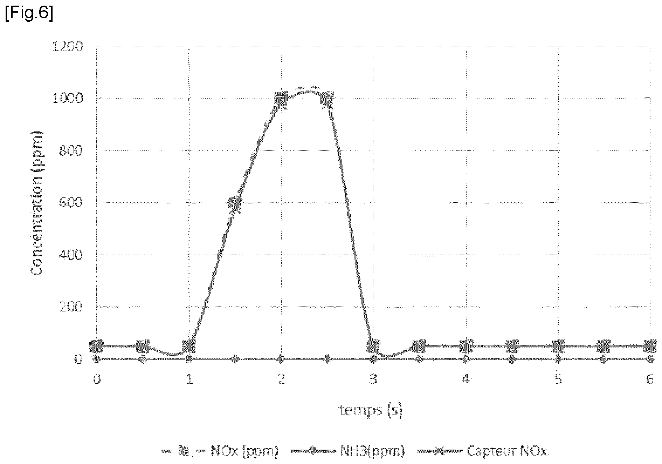

En effet, on constate expérimentalement que le signal brut émis par le capteur de NOx aval 1 peut présenter trois profils d'évolution différents qui sont illustrés sur les figures 6, 7 et 8. Ici, le profil d'évolution est la courbe représentant la concentration en oxydes d'azote acquise par le capteur de NOx aval C11 en fonction du temps.

Les trois profils d'évolution correspondent à des taux de répartition des concentrations en monoxyde d'azote (NO), en dioxyde d'azote (NO2), et en ammoniac (NH3) différents. Ici, les taux de répartition sont des valeurs prédéfinies, obtenues à partir des observations expérimentales.

Afin de savoir quels sont les composants présents à la sortie du piège à NOx dans chacun de ces profils d'évolution dans le but de donner une estimation du taux de répartition correspondant audit profil, on utilise les moyens d'acquisition de la concentration en oxydes d'azote (NOx) et en ammoniac (NH$_3$) indépendants du capteur de NOx aval C11.

La concentration en oxydes d'azote (NOx) et en ammoniac (NH$_3$) acquise par des moyens d'acquisition indépendants est également représentée sur le même graphique que le signal brut du capteur de NOx aval C11.

Le graphique illustré sur chacune des figures 6 à 8 a un axe des abscisses représentant le temps en secondes (s) et un axe des ordonnées représentant la concentration en partie par million (ppm).

Précisément, sur chacune de ces figures, le signal brut émis par le capteur de NOx aval C11 est représenté par une ligne continue reliant les points en croix.

On trouve également sur chacune de ces figures, la concentration en oxydes d'azote (NOx), incluant le monoxyde d'azote (NO) et le dioxyde d'azote (NO2), qui est déterminée par un premier moyen d'acquisition indépendant du capteur NOx aval C11. A titre d'exemple, le premier moyen d'acquisition indépendant peut être une baie d'analyse par chimiluminescence. La concentration en oxydes d'azote (NOx) mesurée par le premier moyen d'acquisition indépendant est représentée par une ligne discontinue reliant les points en carrée.

En outre, sur chacune des figures 6 à 8, on trouve également la concentration en ammoniac (NH$_3$) déterminée par un deuxième moyen d'acquisition indépendant du capteur de NOx aval C11. A titre d'exemple, le deuxième moyen d'acquisition indépendant est une spectroscopie infrarouge à transformée de Fourier (ou encore FTIR, de l'anglais Fourier Transform InfraRed spectroscopy). La concentration en ammoniac (NH$_3$) mesurée par le deuxième moyen d'acquisition indépendant est représentée par une ligne continue reliant les points en losange.

Sur la figure 6 :

- le premier profil du signal brut du capteur de NOx aval C11 présente une seule phase de croissance dans laquelle la dérivée première est positive, puis une seule phase de décroissance dans laquelle la dérivée première est négative. Entre ces deux phases, il y a un seul pic au milieu où la valeur de concentration en oxydes d'azote atteint une valeur maximale ;
- parallèlement, les mesures indépendantes d'oxydes d'azote (NOx) et d'ammoniac (NH$_3$) indiquent l'absence de l'ammoniac (NH$_3$) pendant toute la purge du piège à NOx 1 et montrent que les composants sortant du piège sont principalement des oxydes d'azote (NOx).

Dans le cas du premier profil d'évolution, un taux de répartition a2 sera appliqué à la concentration en oxydes d'azote (NOx) acquise par le capteur de NOx aval C11. Dans un exemple de réalisation, ce taux de répartition a2 présente 80% de monoxyde d'azote (NO), 20% de dioxyde d'azote (NO$_2$) et 0% d'ammoniac (NH3).

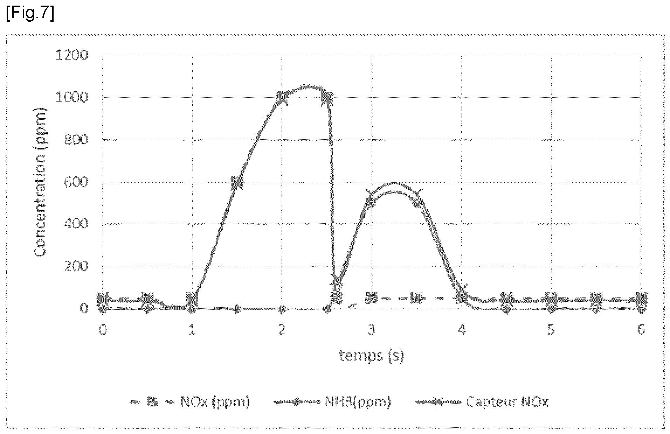

Sur la figure 7 :

- le deuxième profil du signal brut du capteur de NOx aval C11 présente une première phase de croissance suivie d'une première phase de décroissance jusqu'à une valeur minimale de la concentration en oxydes d'azote (NOx), puis une deuxième phase de croissance à partir de ladite valeur minimale, suivie d'une deuxième phase de décroissance. Un premier pic de valeur est situé entre la première phase de croissance et la première phase de croissance, et un deuxième pic de valeur, moins important que le premier pic, situé entre la deuxième phase de croissance et la deuxième phase de décroissance ;
- parallèlement, les mesures indépendantes montrent la présence d'oxydes d'azote (NOx) et également d'ammoniac (NH$_3$).

Le deuxième profil est distinct du premier profil en ce que, à partir du début de la deuxième phase de croissance, qui correspond à la deuxième fois où la dérivée première est nulle, ce ne sont plus des oxydes d'azote (NOx) qui sont émis, mais de l'ammoniac (NH₃) qui perturbe le signal du capteur de NOx aval C11.

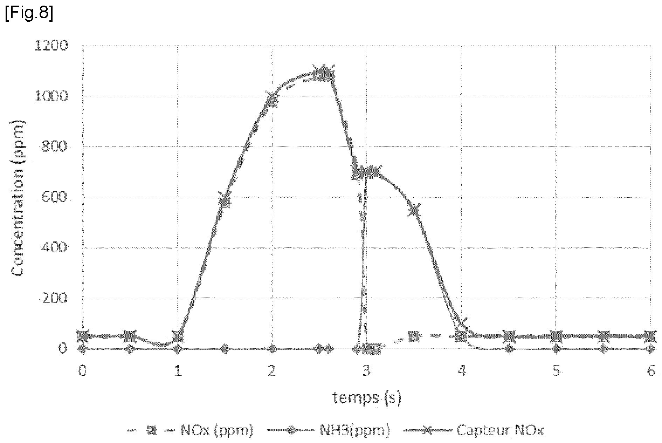

Sur la figure 8 :

- le troisième profil du signal brut du capteur de NOx aval C11 présente une première phase de croissance suivie d'une première phase de décroissance, puis une deuxième phase de croissance, suivie d'une deuxième phase de décroissance. Toutefois, à la différence du deuxième profil, la jonction entre la première phase de décroissance et la deuxième phase de croissance est un point où la dérivée seconde est nulle. Cette jonction est encore appelée le point d'inflexion.

- En parallèle, les mesures indépendantes montrent que l'ammoniac (NH₃) est émis avec les oxydes d'azote (NOx) et perturbe le signal.

Dans le cas du deuxième et du troisième profil d'évolution, la présence de l'ammoniac (NH₃) risque de perturber la mesure du capteur de NOx aval C11. Pour cette raison, dans un exemple de réalisation, on applique le même taux de répartition $\alpha 3$ indiquant 0% de monoxyde d'azote (NO), 0% de dioxyde d'azote (NO₂) et 100% d'ammoniac (NH₃).

A partir de l'observation expérimentale décrite ci-dessus, la première étape de surveillance E350 peut comprendre, selon un mode de réalisation, les sous-étapes illustrées sur la figure 5 et détaillées dans les paragraphes suivants.

Dans un premier temps, l'étape de surveillance E350 commence par une première sous-étape de calcul numérique E353 représentatif de la dérivée première de la concentration en oxydes d'azote (NOx) acquise en aval du piège à NOx 1 en fonction du temps. Ladite première sous-étape E353 a pour but de détecter le premier pic de valeur maximale de la concentration acquise.

Si, à l'issue de ladite première sous-étape de calcul numérique E353, aucun pic de valeur maximale de la concentration en oxydes d'azote (NOx) acquise n'a été détecté, c'est-à-dire qu'à aucun moment de la purge, la dérivée première est égale à 0, le premier taux de répartition $\alpha 1$ prédéfini est sélectionné. Dans ce cas, il y a donc une évolution monotone du signal du capteur de NOx aval C11.

Si, au contraire, à l'issue de la première sous-étape de calcul numérique E353, on détecte un premier instant où la dérivée première est égale à 0, les sous-étapes décrites dans les paragraphes suivants sont réalisées. A noter que la dérivée première nulle correspond au premier pic de valeur maximale de la concentration en oxydes d'azote (NOx).

A partir du moment où le premier instant où la dérivée première est nulle est détecté, on réalise une deuxième sous-étape de calcul numérique E355 représentatif de la dérivée première et de la dérivée seconde. Le but de cette étape est de détecter si la valeur de concentration en oxydes d'azote (NOx) atteint une valeur minimale (cas du deuxième profil) ou de détecter le point d'inflexion (cas du troisième profil).

Si, à l'issue de ladite deuxième sous-étape de calcul numérique E355, ladite dérivée première et ladite dérivée seconde sont différentes de 0, un deuxième taux de répartition $\alpha 2$ prédéfini est sélectionné E372. Dans ce cas, la courbe de la concentration en oxydes d'azote (NOx) acquise comprend une seule bosse avec un seul un pic de valeur maximale. Cela signifie que le profil acquis correspond au premier profil présenté précédemment auquel est attribué un taux de répartition de 80% de monoxyde d'azote (NO), 20% de dioxyde d'azote (NO₂) et 0% d'ammoniac (NH₃).

Dans un exemple de réalisation, le premier taux de répartition $\alpha 1$ est identique au deuxième taux de répartition $\alpha 2$.

Si, au contraire, à l'issue de ladite deuxième sous-étape de calcul numérique E355, l'une parmi ladite dérivée première et ladite dérivée seconde est égale à 0, un troisième taux de répartition $\alpha 3$ prédéfini est sélectionné E373. Dans ce cas, soit la valeur minimale est détectée, soit le point d'inflexion est détecté. Cela signifie que le profil acquis correspond soit au deuxième profil, soit au troisième profil. Dans l'exemple illustré, un troisième taux de répartition $\alpha 3$ identique est appliqué à ces deux profils et indique 0% de monoxyde d'azote (NO), 0% de dioxyde d'azote (NO2) et 100% d'ammoniac (NH3).

Les sous-étapes présentées ci-dessous sont réalisées de manière répétitive durant toute la durée de la purge du piège à NOx 1.

Ici, comme illustré sur la figure 5, la sélection d'un taux de répartition parmi des taux de répartition prédéfinis fait partie d'une première étape de sélection E370 suivie la première étape de surveillance E350.

La première étape de sélection E370 indique la fin de l'étape de traitement riche 300.

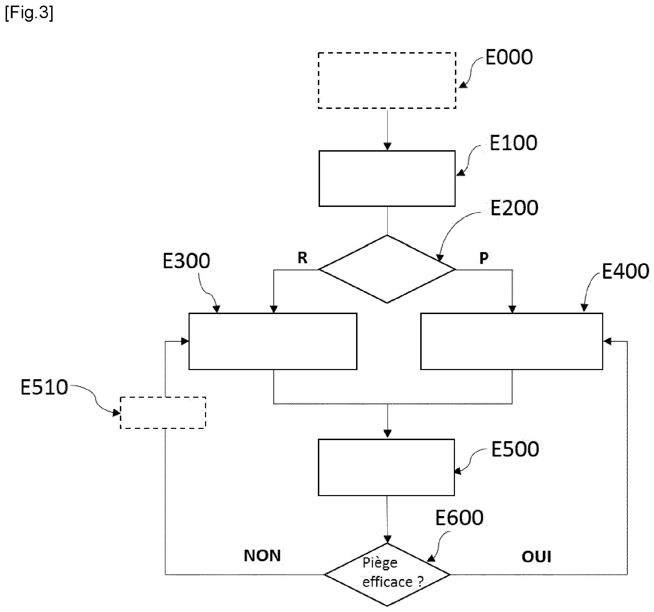

Revenons à l'étape d'identification E200 du mode de fonctionnement du moteur, illustrée sur la figure 3. Si le mode de fonctionnement identifié est le mode de fonctionnement pauvre, le dispositif d'estimation 10 exécute par la suite une deuxième étape de traitement E400 des données acquises par le deuxième ensemble de capteurs C2k, dite étape de traitement pauvre E400.

Dans cet exemple, l'étape de traitement pauvre E400 est réalisée par des deuxièmes moyens de traitement comprenant la deuxième porte d'entrée 52, le processeur 60, les mémoires 70 et les moyens de temporisation 80. Les deuxièmes moyens de traitement se basent sur les données acquises du deuxième ensemble de capteurs C2k.

Ici, le deuxième ensemble de capteurs C2k comprend le débitmètre C22, le capteur de NOx aval C23, le capteur de température C21 et le capteur de NOx aval C11.

Pendant le mode de fonctionnement pauvre du moteur 3, le piège à NOx 1 est en phase de stockage. Pendant cette phase de stockage, les oxydes azotes (NOx) émis en aval du piège à NOx 1 sont en partie des oxydes azotes (NOx) qui ne peuvent pas être absorbés par le piège à NOx 1, car l'efficacité du piège à NOx 1 n'est pas totale. Les oxydes azotes (NOx) émis en aval du piège à NOx 1 peuvent être aussi des oxydes azotes issus d'un phénomène de désorption en cas de forte variation de température et/ou de débit du gaz de combustion entre l'extérieur et l'intérieur du piège.

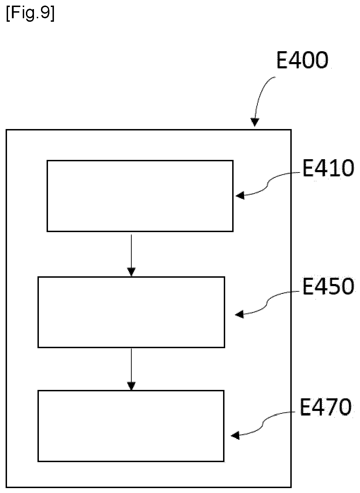

En référence à la figure 9, selon un mode de réalisation, l'étape de traitement pauvre E400 comprend

- une étape de mesure E410 de la température T dans le piège à NOx ;
- une étape d'analyse E450 des données en fonction de la température T mesurée ; et
- une deuxième étape de sélection 470 d'un taux de répartition ($\alpha$4, $\alpha$5, $\alpha$6) des concentrations en monoxyde d'azote, NO, en dioxyde d'azote, $NO_2$, et en ammoniac, $NH_3$, en aval du piège à NOx, parmi un deuxième ensemble de taux de répartition prédéfinis ($\alpha$4, $\alpha$5, $\alpha$6) en fonction du résultat de ladite étape d'analyse E450 des données.

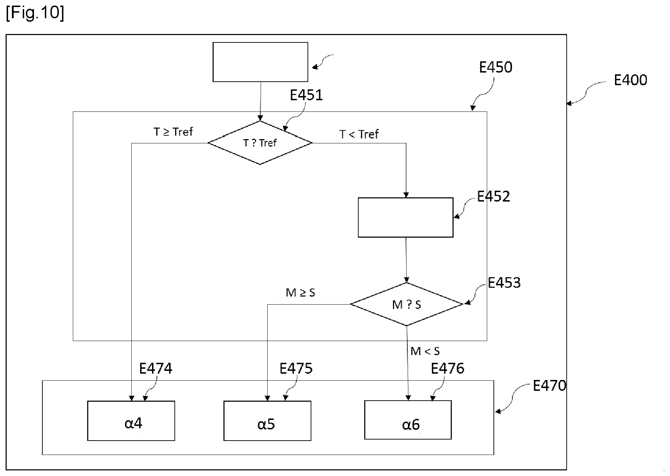

Dans un mode de réalisation et comme illustré sur la figure 10, l'étape d'analyse E450 comprend en premier lieu une première sous-étape de comparaison E451 de la température T mesurée avec une température de référence Tref prédéfinie. La température T mesurée est acquise par le capteur de température C21 et retenue par les mémoires 70.

Puis, si la première sous-étape de comparaison E451 indique que la température T mesurée est supérieure ou égale à la température de référence Tref prédéfinie, un quatrième taux de répartition $\alpha$4 prédéfini est sélectionné.

A titre d'exemple, la température de référence Tref peut être par exemple 300°C. Dans ce cas, la température T du piège à NOx est donc supérieure à 300°C ; ce qui est favorable à la production du dioxyde d'azote ($NO_2$). Pour cette raison, selon un mode de réalisation, le quatrième taux de répartition $\alpha$4 prédéfini peut présenter 60% de monoxyde d'azote (NO), 40% de dioxyde d'azote (NO2) et 0% d'ammoniac ($NH_3$).

En revanche, si la température mesurée est inférieure à la température de référence, la conversion des oxydes d'azote (NOx) dépend du niveau de stockage, notamment de la masse des oxydes d'azote stockée par le piège à NOx 1. Pour cette raison, les sous-étapes décrites dans les paragraphes suivants sont réalisées dans le but de déterminer le niveau de stockage du piège à NOx 1.

Précisément, on réalise une sous-étape de détermination E452 du niveau de stockage M du piège à NOx 1, puis une deuxième sous-étape de comparaison E453 du niveau de stockage (M) déterminé avec un seuil de niveau de stockage S prédéfini.

Dans le cas où le niveau de stockage déterminé M est supérieur ou égal au seuil de niveau de stockage S, un cinquième taux de répartition prédéfini $\alpha$5 est sélectionné E475. Ceci signifie donc le piège à NOx 1 présente une forte capacité de stockage. Le cinquième taux de répartition $\alpha$5 peut présenter donc 80% de monoxyde d'azote (NO), 20% de dioxyde d'azote (NO2) et 0% d'ammoniac (NH3).

Cependant, si le niveau de stockage déterminé M est inférieur au seuil de niveau de stockage S, un sixième taux de répartition prédéfini $\alpha$6 est sélectionné E476. Dans ce cas, le piège à NOx présente une faible capacité de stockage. Un exemple de valeur du sixième taux de répartition peut être de 100% de monoxyde d'azote (NO), 0% de dioxyde d'azote ($NO_2$) et 0% d'ammoniac ($NH_3$).

Dans un exemple de réalisation, la sous-étape de détermination E452 du niveau de stockage du piège à NOx comprend une sous-étape de calcul de la masse des oxydes d'azote (NOx) stockés dans le piège à NOx. Ce calcul de la masse peut être un calcul numérique représentatif de l'intégrale temporelle selon la formule suivante :

$$M = \int Qech \times ([NOx]in - [NOx]out)\, dt;$$

dans lequel Qech est le débit des gaz d'échappement [NOx]in est la concentration en oxydes d'azote (NOx) à l'entrée du piège à NOx, et [NOx]out est la concentration en oxydes d'azote (NOx) à la sortie du piège à NOx.

Dans l'exemple illustré, le débit des gaz d'échappement est mesuré par le débitmètre C22. La concentration en oxydes d'azote (NOx) à l'entrée du piège à NOx 1 est mesurée par le capteur de NOx amont C22. Enfin, la concentration en oxydes d'azote (NOx) à la sortie du piège à NOx 1 est mesurée par le capteur de NOx aval C11.

Ici, le calcul de la masse M est effectué par le calculateur 40, précisément par le processeur 60 avec les données stockées dans les mémoires 70.

Comme illustré sur la figure 10, la sélection d'un taux de répartition parmi les taux de répartition prédéfinis $\alpha$4 à $\alpha$6 fait partie de la deuxième étape de sélection E470 suivie l'étape d'analyse.

La deuxième étape de sélection 470 marque la fin de l'étape de traitement pauvre E400.

A l'issue de l'étape traitement riche E300 ou de l'étape traitement pauvre E400, nous obtenons une estimation de concentration en monoxyde d'azote (NO), en dioxyde d'azote ($NO_2$), et le cas échéant une estimation de concentration en ammoniac ($NH_3$).

Le dispositif d'estimation 10 réalise ensuite une étape d'ajustement E500 de la quantité d'ammoniac ($NH_3$) de sorte que la quantité d'ammoniac ($NH_3$) reste en dessous d'un seuil limite prédéfini.

Dans l'exemple illustré, l'étape d'ajustement 500 est réalisée par des moyens d'ajustement de la quantité d'ammoniac ($NH_3$) de sorte que la quantité d'ammoniac (NH3) sortant de la ligne d'échappement reste en dessous d'un seuil limite prédéfini. Ici, les moyens d'ajustement comprennent le processeur 60, les mémoires 70, les portes de sortie 90, notamment la première porte de sortie 91 établissant la communication avec l'injecteur 35.

Précisément, lorsque l'ammoniac (NH$_3$) est estimé absent à la sortie du piège à NOx, le calculateur 40 ordonne à l'injecteur 35 d'injecter une quantité d'urée (Adblue®) suffisante pour traiter de manière efficace les oxydes d'azote (NOx) sortant du piège à NOx 1 et de manière à ne pas produire d'ammoniac (NH$_3$) résiduel après le catalyseur SCR.

En revanche, lorsqu'il y a la présence de l'ammoniac (NH$_3$) à la sortie du piège à NOx, le calculateur 40 ordonne à l'injecteur 35 d'injecter une quantité d'urée (Adblue®) qui est inférieure à la quantité d'urée en cas d'absence d'ammoniac (NH$_3$) à la sortie du piège à NOx 1. De cette manière, l'ammoniac (NH$_3$) produit à la sortie du piège à NOx peut contribuer au traitement des oxydes d'azote (NOx) dans le catalyseur SCR 4 en étant stocké comme agent de réducteur. Ceci conduit donc à diminuer les injections d'urée (Adblue®) tout en gardant la même efficacité de traitement des oxydes d'azote (NOx).

Ainsi, dans les deux cas précités, grâce à l'estimation des concentrations en monoxyde d'azote (NO), n dioxyde d'azote (NO$_2$), et en ammoniac (NH$_3$), obtenue à l'issue de l'étape de traitement riche E300 ou de l'étape de traitement pauvre E400, la quantité d'ammoniac (NH$_3$) produite dans la ligne d'échappement est régulée de manière à apporter un traitement efficace des oxydes d'azotes (NOx) sans laisser trop d'ammoniac (NH$_3$) résiduel, voire en le supprimant.

De manière optionnelle, l'étape d'ajustement E500 est suivie d'une étape d'estimation E600 d'une efficacité du piège à NOx 1. Lors de cette étape E600, l'estimation des concentrations en monoxyde d'azote (NO), en dioxyde d'azote (NO2), et le cas échéant en ammoniac (NH3) permet d'estimer l'efficacité du piège à NOx 1.

Si l'efficacité estimée indique que le piège à NOx n'est pas efficace, pendant une étape de déclenchement E510 de la purge du piège à NOx, le dispositif d'estimation 10 envoie à la rampe d'injection 30 une commande de modification du ratio entre l'air et le carburant de manière à obtenir un mélange air-carburant riche (r>1). Le moteur passant en mode de fonctionnement riche, la purge du piège à NOx 1 peut donc commencer. Pendant cette purge, l'étape de traitement E300 peut être réalisée de nouveau.

Dans un mode de réalisation, à la fin de la purge, la capacité de stockage du piège à NOx 1 est restaurée, c'est-à-dire la masse stockée d'oxydes d'azote (NOx) dans le piège à NOx est remise à 0.

Si l'efficacité estimée indique que le piège à NOx est efficace, l'étape de traitement pauvre 400 peut être réalisée de nouveau.

Dans un exemple de réalisation, l'efficacité du piège à NOx 1 peut être déterminée par un calcul de la masse des oxydes d'azote (NOx) stockés dans le piège à NOx et par une comparaison de cette masse calculée avec un seuil. En fonction de cette comparaison, on peut déterminer si le piège à NOx 1 est efficace ou non. Le calcul de la masse peut être similaire à celui présenté dans l'étape de traitement pauvre E400 plus haut.

Le procédé d'estimation ainsi que le dispositif d'estimation décrits ci-dessus permet une prédiction assez précise de la quantité d'oxydes d'azote en aval du piège à NOx, avec une erreur de +/- 15ppm quelles que soient les conditions de transitions de charge du piège à NOx. Ils permettent également d'obtenir la part spécifique du dioxyde d'azote (NO$_2$) parmi les oxydes d'azote (NOx) mesurés.

Par ailleurs, le procédé d'estimation et le dispositif d'estimation tels que décrits identifient les productions d'ammoniac NH$_3$ du piège à NOx pendant la purge dudit piège. Ils permettent également de corriger l'information donnée par le capteur NOx aval sans trop de complexité.

Il s'agit ici d'une solution simple à mettre en oeuvre et cela évite une modélisation lourde des phénomènes physiques et de la cinématique chimique toujours de plus en plus complexe.

## Revendications

1. Procédé d'estimation d'une quantité d'oxydes d'azote, NOx, et/ou d'une quantité d'ammoniac, NH$_3$, à la sortie d'un piège à NOx (1) disposé dans une ligne d'échappement (2) d'un moteur à combustion interne (3), ledit moteur (3) pouvant fonctionner selon

   - soit un mode de fonctionnement en mélange air-carburant pauvre pendant lequel le piège à NOx (1) stocke des oxydes d'azote, NOx, dit mode de fonctionnement pauvre;
   - soit un mode de fonctionnement de régénération en mélange air-carburant riche pendant lequel le piège à NOx (1) est purgé, dit mode de fonctionnement riche ;

   ledit procédé étant exécuté par un calculateur (40) avec des données acquises par un premier ensemble de capteurs (C1j) et par un deuxième ensemble de capteurs (C1k), ledit procédé comprenant :

   - une étape d'obtention (E100) d'une information de richesse du mélange air-carburant ;
   - une étape d'identification (E200) du mode de fonctionnement du moteur ;
   - une première étape de traitement (E300) des données acquises par le premier ensemble de capteurs (C1j), dite étape de traitement riche (E300), si le mode de fonctionnement du moteur (3) identifié est le mode de fonctionnement riche ;

et

- une deuxième étape de traitement (E400) des données acquises par le deuxième ensemble de capteurs (C2k), dite étape de traitement pauvre (E400), si le mode de fonctionnement du moteur (3) identifié est le mode de fonctionnement pauvre ;

- à l'issue de l'étape de traitement riche (E300) ou de l'étape de traitement pauvre (E400), une étape d'ajustement (E500) de la quantité d'ammoniac, $NH_3$, de sorte que la quantité d'ammoniac, $NH_3$, reste en dessous d'un seuil limite prédéfini, ledit procédé étant **CARACTERISE EN CE QUE** l'étape de traitement riche (E300) comprend :

- une étape d'initialisation (E310) du traitement riche ;
- une première étape d'acquisition (E330) de la concentration en oxydes d'azote, NOx, en aval du piège à NOx ;
- une première étape de surveillance (E350) de l'évolution temporelle de la concentration en oxydes d'azote, NOx, acquise en aval du piège à NOx ; et
- en fonction du résultat de ladite étape de surveillance (E350), une première étape de sélection (E370) d'un taux de répartition ($\alpha$1, $\alpha$2, $\alpha$3 ) des concentrations en monoxyde d'azote, NO, en dioxyde d'azote, $NO_2$, et en ammoniac, $NH_3$, en aval du piège à NOx, parmi un premier ensemble de taux de répartition prédéfinis ($\alpha$1, $\alpha$2, $\alpha$3 ).

2. Procédé selon l'une des revendications précédentes, dans lequel ladite première étape de surveillance (E350) comprend

- une première sous-étape de calcul numérique (E353) représentatif de la dérivée première de la concentration en oxydes d'azote, NOx, acquise en aval du piège à NOx en fonction du temps ;
- **si**, à l'issue de ladite première sous-étape de calcul numérique (E353), ladite dérivée première est différente de 0, un premier taux de répartition prédéfini ($\alpha$1) est sélectionné (371) ;
- **si**, à l'issue de ladite première sous-étape de calcul numérique (E353), ladite dérivée première est égale à 0, les sous-étapes suivantes sont réalisées :

- une deuxième sous-étape de calcul numérique (E355) représentatif de la dérivée première et de la dérivée seconde de la concentration en en oxydes d'azote, NOx, acquise en aval du piège à NOx en fonction du temps ;

- **si**, à l'issue de ladite deuxième sous-étape de calcul numérique (E355), ladite dérivée première et ladite dérivée seconde sont différentes de 0, un deuxième taux de répartition prédéfini ($\alpha$2) est sélectionné (E372) ;
- **si**, à l'issue de ladite deuxième sous-étape de calcul numérique (E355), une parmi ladite dérivée première et ladite dérivée seconde est égale à 0, un troisième taux de répartition prédéfini ($\alpha$3) est sélectionné (E373).

3. Procédé selon la revendication précédente, dans lequel

- le premier taux de répartition ($\alpha$1) et le deuxième taux de répartition ($\alpha$2) sont identiques, ledit premier taux de répartition ($\alpha$1) ou ledit deuxième taux de répartition ($\alpha$2) présentant 80% de monoxyde d'azote, NO, 20% de dioxyde d'azote, $NO_2$, et 0% d'ammoniac, $NH_3$ ;
- le troisième taux de répartition ($\alpha$3) présente 0% de monoxyde d'azote, NO, 0% de dioxyde d'azote, $NO_2$, et 100% d'ammoniac, $NH_3$.

4. Procédé selon l'une des revendications précédentes, dans lequel l'étape de traitement pauvre (E400) comprend :

- une étape de mesure (E410) de la température (T) dans le piège à NOx;
- une étape d'analyse (E450) des données en fonction de la température (T) mesurée ; et
- une deuxième étape de sélection (470) d'un taux de répartition ($\alpha$4, $\alpha$5, $\alpha$6 ) de concentrations en monoxyde d'azote, NO, en dioxyde d'azote, $NO_2$, et en ammoniac, $NH_3$, en aval du piège à NOx, parmi un deuxième ensemble de taux de répartition prédéfinis ($\alpha$4, $\alpha$5, $\alpha$6 ) en fonction du résultat de ladite étape d'analyse (E450) des données.

5. Procédé selon la revendication précédente, dans lequel ladite étape d'analyse (450) des données comprend :

- une première sous-étape de comparaison (E451) de la température (T) mesurée avec une température de référence (Tref) prédéfinie ;
- **si**, à l'issue de ladite première sous-étape de comparaison (E451), la température (T) mesurée est supérieure ou égale à la température de référence (Tref) prédéfinie, un quatrième taux de répartition prédéfini ($\alpha$4) est sélectionné (474);
- **si ce n'est pas le cas**, les sous-étapes suivantes sont réalisées :

- une sous-étape de détermination (E452) du niveau de stockage (M) du piège à NOx ;
- une deuxième sous-étape de comparaison (E453) du niveau de stockage (M) déterminé avec un seuil de niveau de stockage (S) prédéfini ;
- **si**, à l'issue de ladite deuxième sous-étape de comparaison (E453), le niveau de stockage déterminé (M) est supérieur ou égal au niveau de stockage seuil (S), un cinquième taux de répartition prédéfini ($\alpha5$) est sélectionné (E475) ;
- **si ce n'est pas le cas**, un sixième taux de répartition prédéfini ($\alpha6$) est sélectionné (E476) .

6. Procédé selon la revendication précédente, dans lequel :

- le qatrième taux de répartition ($\alpha4$) présente 60% de monoxyde d'azote, NO, 40% de dioxyde d'azote, $NO_2$, et 0% d'ammoniac, $NH_3$ ;
- le cinquième taux de répartition ($\alpha5$) présente 80% de monoxyde d'azote, NO, 20% de dioxyde d'azote, $NO_2$, et 0% d'ammoniac, $NH_3$ ; et
- le sixième taux de répartition ($\alpha6$) présente 100% de monoxyde d'azote, NO, 0% de dioxyde d'azote, $NO_2$, et 0% d'ammoniac, $_{NH3}$.

7. Procédé selon l'une quelconque des revendications précédentes, dans lequel l'étape d'ajustement (E500) est suivie par une étape d'estimation (E600) d'une efficacité du piège à NOx, et dans lequel:

- **si** le piège à NOx (1) est estimé inefficace, une étape de déclenchement (E510) de la purge du piège à NOx est réalisée et suivie par l'étape de traitement riche (E300);

ou

- **si** le piège à NOx (1) est estimé efficace, l'étape de traitement pauvre (E400) est réalisée.]

**Patentansprüche**

1. Verfahren zum Schätzen einer Stickstoffoxidmenge, NOx, und/oder einer Ammoniakmenge, $NH_3$, im Auslass einer NOx-Falle (1), die in einem Abgasstrang (2) eines Verbrennungsmotors (3) angeordnet ist, wobei der Motor (3) betrieben werden kann gemäß

- entweder einer Betriebsart mit magerem Luft-KraftstoffGemisch, während der die NOx-Falle (1) Stickstoffoxide, NOx, speichert, Mager-Betriebsart genannt;

- oder einer Regenerationsbetriebsart mit fettem Luft-Kraftstoff-Gemisch, während der die NOx-Falle (1) entleert wird, Fett-Betriebsart genannt; wobei das Verfahren von einem Rechner (40) mit Daten ausgeführt wird, die von einer ersten Sensoranordnung (C1j) und von einer zweiten Sensoranordnung (C1k) erfasst werden, wobei das Verfahren umfasst:

- einen Schritt des Erhaltens (E100) einer Information zur Fettheit des Luft-Kraftstoff-Gemisches;
- einen Schritt des Ermittelns (E200) der Betriebsart des Motors;
- einen ersten Schritt der Verarbeitung (E300) der Daten, die von der ersten Sensoranordnung (C1j) erfasst wurden, Schritt der fetten Verarbeitung (E300) genannt, wenn die ermittelte Betriebsart des Motors (3) die Fett-Betriebsart ist;

und

- einen zweiten Schritt der Verarbeitung (E400) der Daten, die von der zweiten Sensoranordnung (C2k) erfasst wurden, Schritt der mageren Verarbeitung (E400) genannt, wenn die ermittelte Betriebsart des Motors (3) die Mager-Betriebsart ist;
- nach dem Schritt der fetten Verarbeitung (E300) oder der mageren Verarbeitung (E400), einen Schritt des Anpassens (E500) der Ammoniakmenge, $NH_3$, so dass die Ammoniakmenge, $NH_3$, unter einem vorgegebenen Grenzwert bleibt, wobei das Verfahren **DADURCH GEKENNZEICHNET IST, DASS** der Schritt der fetten Verarbeitung (E300) umfasst:

- einen Schritt des Initialisierens (E310) der fetten Verarbeitung;
- einen ersten Schritt des Erfassens (E330) der Konzentration an Stickstoffoxiden, NOx, stromab der NOx-Falle;
- einen ersten Schritt des Überwachens (E350) des zeitlichen Verlaufs der Konzentration an Stickstoffoxiden, NOx, die stromab der NOx-Falle erfasst wird; und
- in Abhängigkeit vom Ergebnis des Schritts des Überwachens (E350), einen ersten Schritt des Auswählens (E370) eines Aufteilungsverhältnisses ($\alpha1$, $\alpha2$, $\alpha3$) der Konzentrationen an Stickstoffmonoxid, NO, an Stickstoffdioxid, $NO_2$, und an Ammoniak, $NH_3$, stromab der NOx-Falle unter einer ersten Menge von vorgegebenen Aufteilungsverhältnissen ($\alpha1$, $\alpha2$, $\alpha3$).

2. Verfahren nach einem der vorhergehenden Ansprüche, bei dem der erste Schritt des Überwachens (E350) umfasst

- einen ersten Teilschritt der numerischen Berechnung (E353), die für die erste Ableitung der Konzentration an Stickstoffoxiden, NOx, die stromab der NOx-Falle erfasst wird, in Abhängigkeit von der Zeit repräsentativ ist;
- wenn nach dem ersten Teilschritt der numerischen Berechnung (E353) die erste Ableitung von 0 verschieden ist, wird ein erstes vorgegebenes Aufteilungsverhältnis ($\alpha$1) ausgewählt (371);
- **wenn** nach dem ersten Teilschritt der numerischen Berechnung (E353) die erste Ableitung gleich 0 ist, werden die folgenden Teilschritte ausgeführt:

- ein zweiter Teilschritt der numerischen Berechnung (E355), die für die erste Ableitung und die zweite Ableitung der Konzentration an Stickstoffoxiden, NOx, die stromab der NOx-Falle erfasst wird, in Abhängigkeit von der Zeit repräsentativ ist;
- **wenn** nach dem zweiten Teilschritt der numerischen Berechnung (E355) die erste Ableitung und die zweite Ableitung von 0 verschieden ist, wird ein zweites vorgegebenes Aufteilungsverhältnis ($\alpha$2) ausgewählt (E372);
- **wenn** nach dem zweiten Teilschritt der numerischen Berechnung (E355) eine unter der ersten Ableitung und der zweiten Ableitung gleich 0 ist, wird ein drittes vorgegebenes Aufteilungsverhältnis ($\alpha$3) ausgewählt (E373).

3. Verfahren nach dem vorhergehenden Anspruch, bei dem

- das erste Aufteilungsverhältnis ($\alpha$1) und das zweite Aufteilungsverhältnis ($\alpha$2) identisch sind, wobei das erste Aufteilungsverhältnis ($\alpha$1) oder das zweite Aufteilungsverhältnis ($\alpha$2) 80 % Stickstoffmonoxid, NO, 20 % Stickstoffdioxid, $NO_2$, und 0 % Ammoniak, $NH_3$, aufweist;
- das dritte Aufteilungsverhältnis ($\alpha$3) 0 % Stickstoffmonoxid, NO, 0 % Stickstoffdioxid, $NO_2$, und 100 % Ammoniak, $NH_3$, aufweist.

4. Verfahren nach einem der vorhergehenden Ansprüche, bei dem der Schritt der mageren Verarbeitung (E400) umfasst:

- einen Schritt des Messens (E410) der Temperatur (T) in der NOx-Falle;
- einen Schritt des Analysierens (E450) der Daten in Abhängigkeit von der gemessenen Temperatur (T); und
- einen zweiten Schritt des Auswählens (470) eines Aufteilungsverhältnisses ($\alpha$4, $\alpha$5, $\alpha$6) von Konzentrationen an Stickstoffmonoxid, NO, an Stickstoffdioxid, $NO_2$, und an Ammoniak, $NH_3$, stromab der NOx-Falle unter einer zweiten Menge von vorgegebenen Aufteilungsverhältnissen ($\alpha$4, $\alpha$5, $\alpha$6) in Abhängigkeit vom Ergebnis des Schritts des Analysierens (E450) der Daten.

5. Verfahren nach dem vorhergehenden Anspruch, bei dem der Schritt des Analysierens (450) der Daten umfasst:

- einen ersten Teilschritt des Vergleichens (E451) der gemessenen Temperatur (T) mit einer vorgegebenen Referenztemperatur (Tref);
- **wenn** nach dem ersten Teilschritt des Vergleichens (E451) die gemessene Temperatur (T) größer als oder gleich der vorgegebenen Referenztemperatur (Tref) ist, wird ein viertes vorgegebenes Aufteilungsverhältnis ($\alpha$4) ausgewählt (474);
- **wenn dies nicht der Fall ist**, werden die folgenden Teilschritte ausgeführt:

- ein Teilschritt des Bestimmens (E452) des Speicherniveaus (M) der NOx-Falle;
- ein zweiter Teilschritt des Vergleichens (E453) des bestimmten Speicherniveaus (M) mit einem vorgegebenen Speicherniveauschwellenwert (S);
- **wenn** nach dem zweiten Teilschritt des Vergleichens (E453) das bestimmte Speicherniveau (M) größer als oder gleich dem Speicherniveauschwellenwert (S) ist, wird ein fünftes vorgegebenes Aufteilungsverhältnis ($\alpha$5) ausgewählt (E475);
- **wenn dies nicht der Fall ist**, wird ein sechstes vorgegebenes Aufteilungsverhältnis ($\alpha$6) ausgewählt (E476).

6. Verfahren nach dem vorhergehenden Anspruch, bei dem:

- das vierte Aufteilungsverhältnis ($\alpha$4) 60 % Stickstoffmonoxid, NO, 40 % Stickstoffdioxid, $NO_2$, und 0 % Ammoniak, $NH_3$, aufweist;
- das fünfte Aufteilungsverhältnis ($\alpha$5) 80 % Stickstoffmonoxid, NO, 20 % Stickstoffdioxid, $NO_2$, und 0 % Ammoniak, $NH_3$, aufweist; und
- das sechste Aufteilungsverhältnis ($\alpha$6) 100 % Stickstoffmonoxid, NO, 0 % Stickstoffdioxid, $NO_2$, und 0 % Ammoniak, $NH_3$, aufweist.

7. Verfahren nach einem der vorhergehenden Ansprüche, bei dem der Schritt des Anpassens (E500) von einem Schritt des Schätzens (E600) einer Effizienz der NOx-Falle gefolgt wird und bei dem:

- **wenn** die NOx-Falle (1) als ineffizient eingeschätzt wird, ein Schritt des Auslösens (E510) des Entleerens der NOx-Falle ausgeführt und von dem Schritt der fetten Verarbeitung (E300) gefolgt wird;

oder

- **wenn** die NOx-Falle (1) als effizient eingeschätzt wird, der Schritt der mageren Verarbeitung (E400) ausgeführt wird.

**Claims**

1. Method for estimating a quantity of nitrogen oxides, NOx, and/or a quantity of ammonia, $NH_3$, at the outlet of an NOx trap (1) arranged in an exhaust pipe (2) of an internal combustion engine (3), said engine (3) being able to operate in

- either an operating mode with a lean air-fuel mixture, during which the NOx trap (1) stores nitrogen oxides, NOx, referred to as the lean operating mode;
- or a regenerative operating mode with a rich air-fuel mixture, during which the NOx trap (1) is drained, referred to as the rich operating mode;
said method being executed by a computer (40) with data acquired by a first set of sensors (C1j) and by a second set of sensors (C1k),
said method comprising:

- a step of obtaining (E100) information about the richness of the air-fuel mixture;
- a step of identifying (E200) the operating mode of the engine;
- a first step of processing (E300) the data acquired by the first set of sensors (C1j), referred to as the rich processing step (E300), if the identified operating mode of the engine (3) is the rich operating mode;

**and**

- a second step of processing (E400) the data acquired by the second set of sensors (C2k), referred to as the lean processing step (E400), if the identified operating mode of the engine (3) is the lean operating mode;
- at the end of the rich processing step (E300) or of the lean processing step (E400), a step of adjusting (E500) the quantity of ammonia, $NH_3$, so that the quantity of ammonia, $NH_3$, remains below a predefined limiting threshold, said method being **CHARACTERIZED IN THAT** the rich processing step (E300) comprises:

- a step of initializing (E310) the rich processing;
- a first step of acquiring (E330) the concentration of nitrogen oxides, NOx, downstream of the NOx trap;
- a first step of monitoring (E350) the change over time in the concentration of nitrogen oxides, NOx, which is acquired downstream of the NOx trap; and
- depending on the result of said monitoring step (E350), a first step of selecting (E370) a distribution ratio ($\alpha1$, $\alpha2$, $\alpha3$) of the con-centrations of nitrogen monoxide, NO, of ni-trogen dioxide, $NO_2$, and of ammonia, $NH_3$, downstream of the NOx trap, from a first set of predefined distribution ratios ($\alpha1, \alpha2, \alpha3$).

2. Method according to one of the preceding claims, wherein said first monitoring step (E350) comprises

- a first sub-step of numerical computation (E353) which is representative of the first derivative of the concentration of nitrogen oxides, NOx, which is acquired downstream of the NOx trap as a function of time;
- **if**, at the end of said first numerical computation sub-step (E353), said first derivative is different from 0, a first predefined distribution ratio ($\alpha1$) is selected (371) ;
- **if**, at the end of said first numerical computation sub-step (E353), said first derivative is equal to 0, the following sub-steps are carried out:

- a second sub-step of numerical computation (E355) which is representative of the first derivative and of the second derivative of the concentration of nitrogen oxides, NOx, which is acquired downstream of the NOx trap as a function of time;
- **if**, at the end of said second numerical computation sub-step (E355), said first derivative and said second derivative are different from 0, a second predefined distribu-tion ratio ($\alpha2$) is selected (E372);
- **if**, at the end of said second numerical computation sub-step (E355), one out of said first derivative and said second derivative is equal to 0, a third predefined distri-bution ratio ($\alpha3$) is selected (E373).

3. Method according to the preceding claim, wherein

- the first distribution ratio ($\alpha1$) and the second distribution ratio ($\alpha2$) are identical, said first dis-tribution ratio ($\alpha1$) or said second distribution ra-

tio ($\alpha$2) having 80% nitrogen monoxide, NO, 20% nitrogen dioxide, $NO_2$, and 0% ammonia, $NH_3$;
- the third distribution ratio ($\alpha$3) has 0% nitrogen monoxide, NO, 0% nitrogen dioxide, $NO_2$, and 100% ammonia, $NH_3$.

4. Method according to one of the preceding claims, wherein the lean processing step (E400) comprises:

- a step of measuring (E410) the temperature (T) in the NOx trap;
- a step of analysing (E450) the data as a function of the measured temperature (T); and
- a second step of selecting (E470) a distribution ratio ($\alpha$4, $\alpha$5, $\alpha$6) of concentrations of nitrogen monoxide, NO, of nitrogen dioxide, $NO_2$, and of ammonia, $NH_3$, downstream of the NOx trap, from a second set of predefined distribution ratios ($\alpha$4, $\alpha$5, $\alpha$6) depending on the result of said step of analysing (E450) the data.

5. Method according to the preceding claim, wherein said step of analysing (450) the data comprises:

- a first sub-step of comparing (E451) the measured temperature (T) with a predefined reference temperature (Tref);
- **if**, at the end of said first comparison sub-step (E451), the measured temperature (T) is greater than or equal to the predefined reference temperature (Tref), a fourth predefined distribution ratio ($\alpha$4) is selected (474);
- **if this is not the case**, the following sub-steps are carried out:

  - a sub-step of determining (E452) the storage level (M) of the NOx trap;
  - a second sub-step of comparing (E453) the determined storage level (M) with a predefined storage-level threshold (S);
  - **if**, at the end of said second comparison sub-step (E453), the determined storage level (M) is greater than or equal to the threshold storage level (S), a fifth predefined distribution ratio ($\alpha$5) is selected (E475);
  - **if this is not the case**, a sixth predefined distribution ratio ($\alpha$6) is selected (E476).

6. Method according to the preceding claim, wherein:

- the fourth distribution ratio ($\alpha$4) has 60% nitrogen monoxide, NO, 40% nitrogen dioxide, $NO_2$, and 0% ammonia, $NH_3$;
- the fifth distribution ratio ($\alpha$5) has 80% nitrogen monoxide, NO, 20% nitrogen dioxide, $NO_2$, and 0% ammonia, $NH_3$; and

- the sixth distribution ratio ($\alpha$6) has 100% nitrogen monoxide, NO, 0% nitrogen dioxide, $NO_2$, and 0% ammonia, $NH_3$.

7. Method according to any one of the preceding claims, wherein the adjustment step (E500) is followed by a step of estimating (E600) the effectiveness of the NOx trap, and wherein:

- **if** the NOx trap (1) is estimated to be ineffective, a step of triggering (E510) the draining of the NOx trap is carried out and followed by the rich processing step (E300);

or

- **if** the NOx trap (1) is estimated to be effective, the lean processing step (E400) is carried out.

[Fig. 1]

[Fig. 2]

[Fig.3]

[Fig. 4]

[Fig.5]

[Fig.6]

[Fig.7]

[Fig.8]

[Fig.9]

E400

E410

E450

E470

[Fig.10]

**RÉFÉRENCES CITÉES DANS LA DESCRIPTION**

**Documents brevets cités dans la description**

- EP 3502430 A1